# EUROPEAN PATENT SPECIFICATION

(11) **EP 3 027 096 B1**
(45) Date of publication and mention of the grant of the patent: **06.09.2017**
(21) Application number: 14777790.8
(22) Date of filing: 23.07.2014
(51) Int. Cl.: A47J 31/46, A47J 31/44, F16K 31/00

(54) **PROPORTIONAL VALVE FOR MACHINES FOR PRODUCING AND DISPENSING BEVERAGES**
PROPORTIONALVENTIL FÜR MASCHINEN ZUR HERSTELLUNG UND AUSGABE VON GETRÄNKEN
SOUPAPE DE DOSAGE POUR MACHINES POUR LA PRODUCTION ET LA DISTRIBUTION DE BOISSONS

(30) Priority: 01.08.2013 IT MI20131302
(43) Date of publication of application: 08.06.2016
(73) Proprietor: Dolphin Fluidics S.r.l., 20094 Corsico (MI) (IT)
(72) Inventor: ANDREIS, Diego, 20094 Corsico (MI) (IT)
(74) Representative: Ottazzo, Marco Francesco Agostino
(86) International application number: PCT/IB2014/063347
(87) International publication number: WO 2015/015370

(56) References cited:
- EP-A1- 0 841 510
- EP-A1- 2 147 621
- EP-A1- 2 428 143
- WO-A1-94/00045
- WO-A1-02/090807
- WO-A1-2013/076634
- WO-A2-2009/000859
- US-A- 5 211 371

## Description

The present invention refers to a proportional valve for machines for producing and dispensing beverages like for example espresso coffee.

As it is known, in machines for producing espresso coffee the characteristics in terms of compactness and creaminess of the beverage (coffee) are obtained by forcing the passage of pressurised hot water, typically in the order of 9 bars, through a layer of ground coffee powder. There are numerous ways in which the pressure is generated and is applied to the layer of ground coffee.

In particular, it is known that the dynamic dispensing cycle of the beverage must be preceded by an initial static phase due to the fact that, before water starts to flow through the coffee powder, the ideal condition foresees that the entire layer of powder must be wet in a homogeneous manner so as to prevent "preferential paths" for the water itself from being formed. In the process of extracting the espresso coffee this phase is commonly called the infusion phase, since the powder is macerated in the water without a substantial flow of the water itself.

In order to correctly carry out the infusion phase, devices and provisions are used so as to ensure that the hot water reaches on the coffee powder without turbulence and with a gradual growth of the pressure front. Only at a later moment, after an interval of not less than 5 seconds, does the phase of thrusting hot water at the maximum predefined pressure take place.

One method for controlling the dispensing flow of the beverage in a machine for producing espresso coffee, especially in the infusion phase, consists in interposing an on-off valve on the duct between the actual extraction chamber and the dispensing spout. One embodiment of this method can be found in Italian patent N. 464 838, which proposed a manual actuation valve.

With automatic coffee machines becoming more widespread it has become necessary to automate also the operation of the on-off valve. A very common method is the one illustrated, for example, in documents EP 0 073 739 A1 and EP 0 542 045 A1, in which the initial block of the flow, in order to allow an ideal infusion of the coffee capsule, is made by a mechanical valve of the passive type in which a spring opens when the thrust exerted by the pressure of the coffee exiting overcomes the force of the spring itself.

One drawback of these mechanical valves of the passive type is due to the fact that it is not actually possible to simultaneously control the initial opening time and the dispensing pressure of the infused coffee inside the extraction chamber. Indeed, in order to delay the opening of the valve, it is necessary for the thrust pressure value to be kept, for a desired time period, that is shorter than the pressure value that causes the shutter to open the valve itself. Moreover, during the extraction step, the passage section through the shutter is not controlled and depends upon the thrust of the coffee that passes through it.

One solution the purpose of which is to optimise the dynamic flows inside a machine for espresso coffee is described, for example, in document EP 1 133 944 A2. Such a solution, however, does not allow the flow to be controlled effectively in the initial static step. The document EP 2 428 143 A1 discloses a further example of a machine for preparing espresso coffee. In general, moreover, experience has proven that all these known solutions are not very reliable, essentially due to the unavoidable scales of coffee on the components of the valve. Moreover, these on-off devices, especially those that are driven electrically and in which shutters act on the thrust of a magnetic field, are quite bulky and imply complicated geometries, which are difficult to locate in the most suitable position for the purpose, i.e. near to the dispensing spout of an automatic machine for espresso coffee.

Finally, since on-off devices are generally provided with a considerable mass, due to the fact that the mechanisms assigned to moving the shutter are almost always manufactured in metal, and since such on-off devices must be passed through by the infusion, there is also an unavoidable loss of temperature of the beverage, which unavoidably spoils its ideal organoleptic characteristics.

The purpose of the present invention is thus that of making a proportional valve for machines for producing and dispensing beverages like for example espresso coffee, which is capable of solving the drawbacks mentioned above of the prior art in an extremely simple, cost-effective and particularly functional manner.

In detail, one purpose of the present invention is that of making a proportional valve that is of the active type, so as to be able to establish the relative opening and closing times for the flow in a certain manner.

Another purpose of the present invention is that of making a proportional valve that is dimensionally compact and geometrically simple, therefore with unsubstantial masses and with low heat exchange coefficient, so as to not have an impact on the temperature of the beverage.

A further purpose of the present invention is that of making a proportional valve that is capable of exerting considerable actuation forces, thus being at the same time more resistant to the friction generated by the deposits and by the scales of the beverage.

These purposes according to the present invention are achieved by making a machine for producing and dispensing beverages like for example espresso coffee, as outlined in claim 1.

Further characteristics of the invention are highlighted in the dependent claims, which are an integrating part of the present description.

The characteristics and the advantages of the present invention shall become clearer from the following description, given as an example and not for limiting purposes, with reference to the attached schematic drawings, in which:
figure 1 is a section view of a first embodiment of the proportional valve according to the present invention;
figure 2 is a section view of a second embodiment of the proportional valve according to the present invention;
figure 3 is a schematic view of a first type of a hydraulic circuit of a machine for producing and dispensing beverages in which the proportional valve according to the present invention can be inserted;
figure 4 is a schematic view of a second type of a hydraulic circuit of a machine for producing and dispensing beverages in which the proportional valve according to the present invention can be inserted;
figure 5 is a schematic view of another embodiment of the proportional valve according to the present invention;
figure 6 is a schematic view of a further embodiment of the proportional valve according to the present invention;
figure 7 is a schematic view of a hydraulic circuit of a machine for haemodialysis in which the proportional valve can be inserted;
figure 8 is a schematic view of an embodiment of the proportional valve according to the present invention, which is configured for being applied to a machine that is intended for preparing cold beverages;
figure 9 is a schematic view of another embodiment of a proportional valve according to the present invention, which is configured for being applied to a machine that is intended for preparing cold beverages; and
figure 10 is a schematic view of a volumetric pump that encloses one or more proportional valves according to the present invention.

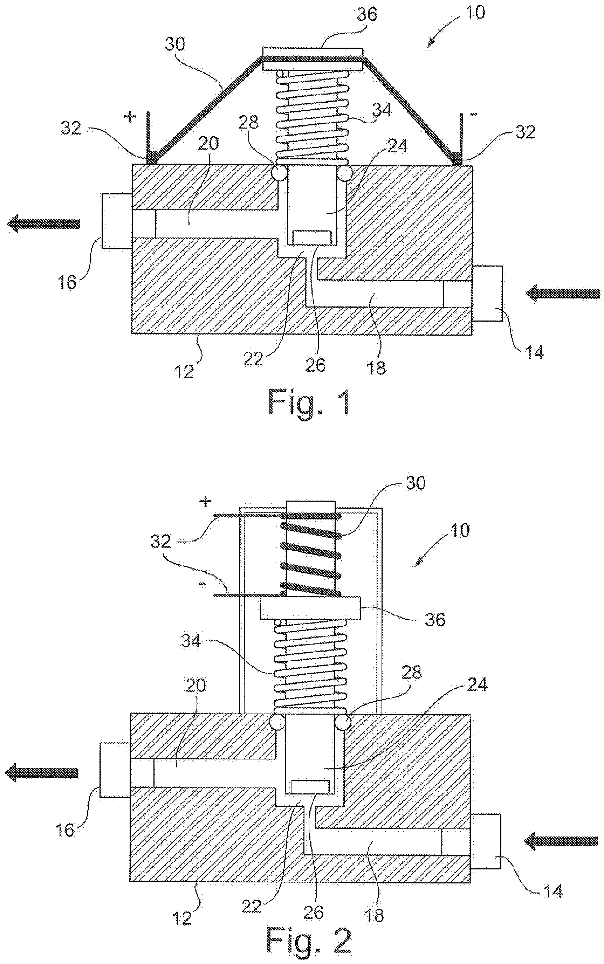

With reference in particular to figures 1 and 2, two separate embodiments of the proportional valve for according to the present invention are shown. In both embodiments the proportional valve is wholly indicated with reference numeral 10.

The proportional valve 10 firstly comprises a main body 12 that is provided with a first connection element 14 for connecting with the hydraulic circuit of the machine, which is configured for entering a fluid into the proportional valve 10, and with a second connection element 16 for connecting with such a hydraulic circuit of the machine, which is configured for the ejection of the fluid from the proportional valve 10. The fluid can be made up for example by a coffee infusion, which enters into the proportional valve 10 coming from the dispensing chamber of the relative machine and comes out from the proportional valve 10 itself so as to be sent to the dispensing spout. The proportional valve 10 therefore really does act as an infusion valve.

Inside the main body 12 there are thus provided at least an inlet duct 18 of the fluid, which is operatively connected to the first connection element 14, and at least one outlet duct 20 of the fluid, which is operatively connected both to such an inlet duct 18, and to the second connection element 16. Inside the main body 12, in an inner chamber 22 forming the intersection point between the inlet duct 18 and the outlet duct 20, an actuation piston 24 is moreover inserted and is movable with reciprocating motion, said actuation piston 24 being capable of selectively putting in communication such an inlet duct 18 with such an outlet duct 20. The actuation piston 24 can be provided both with a first closing gasket 26, which is capable of blocking in a sealing manner the fluid entering the inner chamber 22, and a second sealing gasket 28, which is capable of preventing the fluid from exiting the main body 12 of the proportional valve 10.

The actuation piston 24 is operatively connected to an actuation mechanism that comprises at least one elastic actuation member 30 made of a shape-memory alloy (or "*SMA*"). The actuation mechanism also comprises an electric current generating device 32, which is operatively connected to the elastic actuation member 30 so as to modify, in a progressive and modulable manner, the value of the elastic force that is applied on the actuation piston 24 through a temperature variation that is caused by the passage of electric current inside the elastic actuation member 30 itself.

The actuation mechanism moreover comprises at least an elastic counteracting element 34, which is configured to counteract the elastic force of the elastic actuation member 30. In detail, according to the embodiments of the proportional valve 10 shown in figures 1 and 2, the elastic counteracting element 34 is preferably made up of a helical torsion spring operating by compression, which is wound around the actuation piston stem 24.

Advantageously, the second sealing gasket 28 of the actuation piston 24 is interposed between the inner chamber 22 and all the actuation mechanism components, i.e. both the elastic actuation member 30, and the respective elastic counteracting element 34. In such a way the whole actuation mechanism is isolated with respect to the parts of the proportional valve 10 in which the fluid flows, thus avoiding the formation of possible deposits and/or encrustations on the actuation mechanism components caused by the fluid itself.

In the first embodiment of the proportional valve 10, shown in figure 1, the elastic actuation member 30 consists in a wire made of a shape-memory alloy. The actuation wire 30 is provided with at least one first constraint point obtained on an outer wall of the main body 12 and with a second constraint point that is obtained on an upper portion of the actuation piston 24, like for example a washer 36 keyed on the upper end of the stem of such an actuation piston 24.

In the second embodiment of the proportional valve 10, shown in figure 2, the elastic actuation member 30 on the other hand, consists of a helical torsion spring which operates by compression, wound around the upper portion of the actuation piston stem 24 in an opposite position with respect to the counteracting spring 34, which on the other hand, is wound around the lower portion of such a stem. The actuation spring 30 is provided with a first constraint point obtained on an upper wall of the main body 12 and with a second constraint point that is obtained on a first side of a washer 36 that is keyed on the actuation piston stem 24. On the opposite side of the washer 36 one of the constraint points of the counteracting spring 34 is thus obtained.

The proportional valve 10 described thus far thus operates in the following way. In stand-by conditions the proportional valve 10 is normally kept open through the action of the elastic counteracting element 34. The elastic actuation member 30 is not supplied by the relative generator of electric current 32 and is thus in resting condition. The open configuration of the proportional valve 10, independently from the embodiment, is shown both in figure 1, and in figure 2.

As soon as the dispensing of the fluid begins, in order to ensure the correct infusion process the elastic actuation member 30 is heated through the passage of current dispensed by the relative generator of electric current 32. The elastic actuation member 30, by heating up, reaches its transition temperature and acts on the actuation piston 24 with a force that is sufficient so as to counteract the action of the elastic counteracting element 34 and of the pressure generated by the flow of fluid in inlet into the proportional valve 10 through the relative inlet duct 18. In this activation condition the proportional valve 10 is completely closed.

Moreover, by using a suitable train of current pulses dispensed by the generator of electric current 32, it is also possible to select the gradient ramp of the transition temperature of the material that constitutes the elastic actuation member 30. In such a way the actuation force can vary and the consequent degree of opening of the proportional valve 10, thus introducing variants of the infusion process related to the time, flow rate and to the contrast pressure of the fluid.

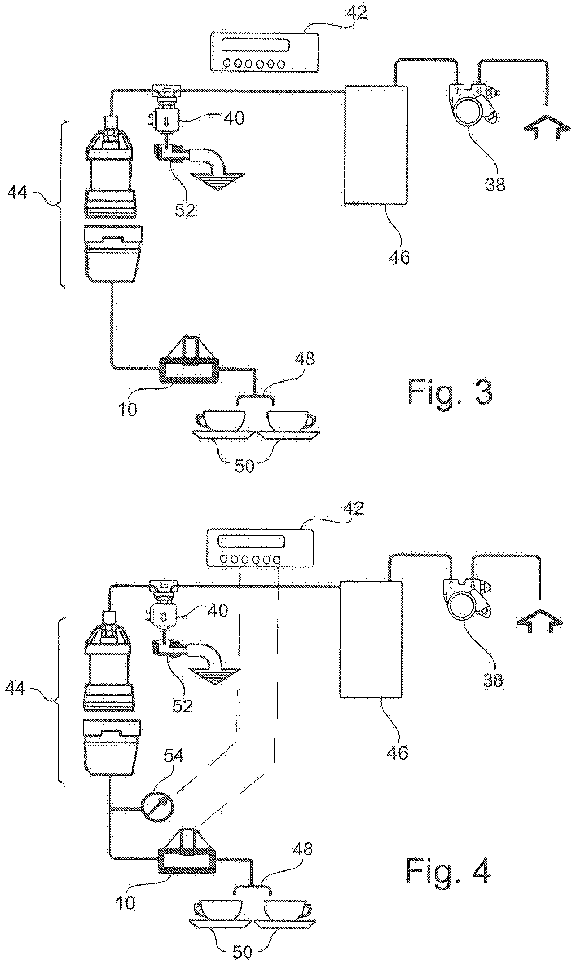

Figure 3 illustrates a typical hydraulic circuit of a machine for producing and dispensing beverages in which the proportional valve 10 according to the present invention can be inserted. The machine is intended, in particular, for producing espresso coffee.

The pump 38 and the three-way solenoid valve 40 of the machine are controlled by a central control unit 42. The dispensing group 44 of the machine is a known dispensing group and it can be both of the type that is suitable for operating with fresh ground coffee, and of the type that is suitable for operating with pre-packed coffee pods or capsules.

When a dispensing phase is started up and the dispensing group 44 has been loaded with the appropriate dose of coffee, both the pump 38, and the solenoid valve 40 are activated, said solenoid valve 40 being capable of sending to the dispensing group 44, through a heating device 46, the water that is thrusted by such a pump 38. The hot water wets the coffee contained in the dispensing group 44.

Since the actuation piston 24 of the proportional valve 10, that blocks the inlet duct 18 through the activation of the shape-memory elastic actuation member 30, prevents the hot water from coming out towards the outlet duct 20, the hot water itself compresses the air contained inside the coffee powder and the ducts of the machine, entrapping it in bubbles with infinitesimal dimensions. This state of compression is kept for a predetermined time, normally within a range of between 5 and 7 seconds, so as to allow the fibres of the grains of coffee to absorb the water.

After this initial time, the duration of which can be programmed as desired through the central control unit 42 and for each of the types of coffee that is desired to be dispensed, the shape-memory elastic actuation member 30 is deactivated, so that the elastic counteracting element 34 can bring the actuation piston 24 back into stand-by condition, opening the outlet duct 20 and allowing the mixture of air and the infusion to flow towards the beaks 48 of the machine and the cups 50 below. When the programmed dose of coffee has been reached, the three-way solenoid valve 40 is deactivated and the residual pressure inside the ducts of the machine is conveyed towards a discharge channel 52.

By acting with a suitable train of current pulses that is dispensed by the generator of electric current 32 it is possible to modulate the variation of temperature of the shape-memory elastic actuation member 30 during the programmable phase, which in general lasts for between 5 and 7 seconds, obtaining a progressive and modulable opening of the passage of the infusion through the outlet duct 20 of the proportional valve 10. This progressive opening of the proportional valve 10 can be advantageous when seeking the perfect extraction of the various types of coffee and as a function of the type of beverage that is desired to be obtained.

Figure 4 illustrates an improvement of the hydraulic circuit of a machine for producing and dispensing beverages in which the proportional valve 10 according to the present invention can be inserted. In the hydraulic circuit of figure 4, a pressure sensor 54, the signal of which is suitably measured and interpreted by the central control unit 42, is inserted between the dispensing group 44 and the proportional valve 10.

The central control unit 42, based upon the pressure level that is preset by the user, generates a suitable train of current pulses for piloting the shape-memory elastic actuation member 30, in order to obtain a feedback control system and that can be programmed by the end user with regard to the opening modes of the proportional valve 10, thus setting an operating flow-rate/pressure point of the ideal infusion for the type of beverage that is wished to be extracted from the machine.

The proportional valve 10 for managing the fluids inside a machine for the preparation of beverages can be used in different situations. Moreover, the fact that such a proportional valve 10 has the requisites of compactness, lightness, quietness and precision, that are obtained by introducing a shape-memory elastic actuation member 30, offers further advantages. One of the typical applications is related to the management of the amount of air necessary for creating the emulsion of the cappuccino. Typically, the amount of air involved is much less and is more difficult to dose, especially with conventional proportional valves with a solenoid actuator. Consequently, the replacement of conventional devices for controlling air with a proportional valve 10 according to the present invention makes it possible to obtain the aforementioned advantages.

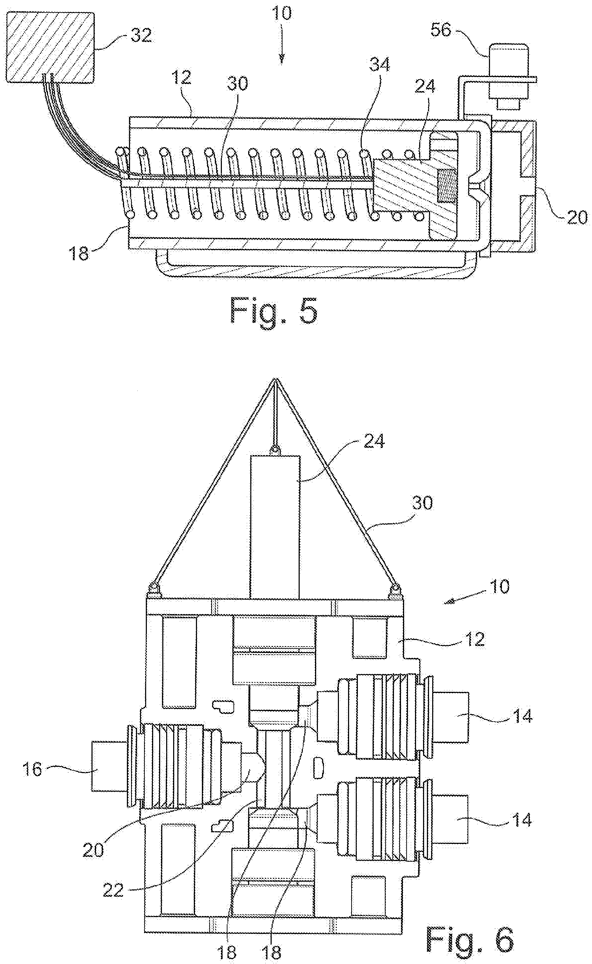

Figure 5 shows another embodiment of the proportional valve 10 according to the present invention. In this embodiment the fluid to be managed is made to pass directly in contact with the shape-memory elastic actuation member 30. In detail, as shown in figure 5, the fluid passes inside the main body 12 coming into direct contact both with the elastic counteracting element 34, and with the elastic actuation member 30. The actuation piston 24 is directly actuated by the elastic actuation member 30, which in turn is capable of modulating the position through the change of state generated by a variation of temperature related to the passage of current, in turn governed by the generator 32.

The proportional valve 10 can also be provided with a flow sensor 56 (flow meter), in this case represented of the optical type (for example laser) so as to keep the system in feedback. A central control unit 42 is therefore capable of modulating the opening of the actuator 24 as a function of the flow that is identified by the flow sensor 56, by directly acting on the current generator 32.

Figure 6 shows a further embodiment of the proportional valve 10 according to the present invention. In this embodiment two distinct inlet ducts 18 for the fluid and a single outlet duct 20 for the fluid are provided.

This embodiment of the proportional valve 10 has a double function. The first function, the simplest one, is that of a diverter valve. The proportional valve 10 indeed has the possibility of selectively placing in communication one of the two inlet ducts 18 of the fluid with the outlet duct 20 of the fluid, while excluding the other fluid inlet duct 18. The second function, a particularly advantageous one, exploits the proportionality of the actuation piston 24, which can be located in a certain intermediate position acting as an actual mixer, which is controlled electronically and is modulable, of the two entering fluids.

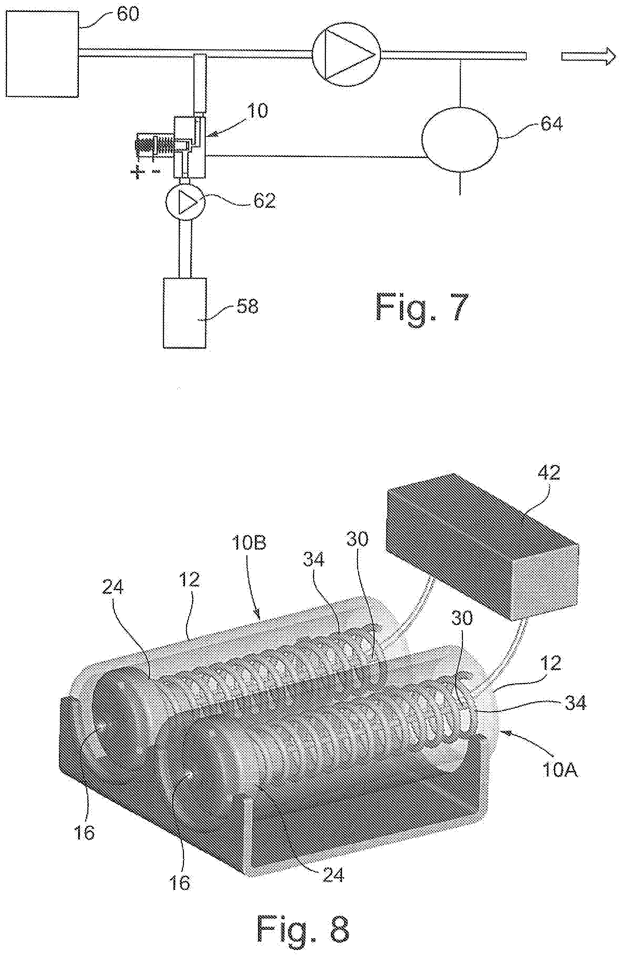

Figure 7 shows a hydraulic circuit of a machine for haemodialysis in which the proportional valve 10 can be inserted. Haemodialysis machines of the known type are equipped with a dialyser filter, where there is the exchange of substances from the blood of the patient and the dialysing liquid, which replicates in an approximate manner the operation of a human kidney. More specifically, the proportional valve 10 can be inserted in the circuit that reconstitutes the dialysing liquid, which occurs through an addition of a concentrated saline solution, which is taken from a first tank 58, to the distilled water that is taken from a second tank 60.

The dosing of the concentrated saline solution occurs in a very precise manner and generally involves very small flow rates. Normally, this dosing occurs through a volumetric pump that is actuated by a brushless motor, fed-back for example by a conductivity sensor 64 (conductimeter) that keeps the concentration of dialysing liquid under control. Current volumetric pumps used in machines for haemodialysis have a complex construction, in addition to having a high cost, and in order to obtain a suitable amount of precision they also require quite an evolved motorization, with the relative complications of the feed-back control.

The volumetric pump can be replaced with a pump 62 having a construction that is very simple, cost-effective and compact, which is operatively connected to the proportional valve 10 according to the present invention. The feedback would occur in a very simple and precise manner directly on the proportional valve 10, obtaining also a very high level of "micro-dosing" precision, all with a circuit for reconstituting the dialysing liquid that is compact and light.

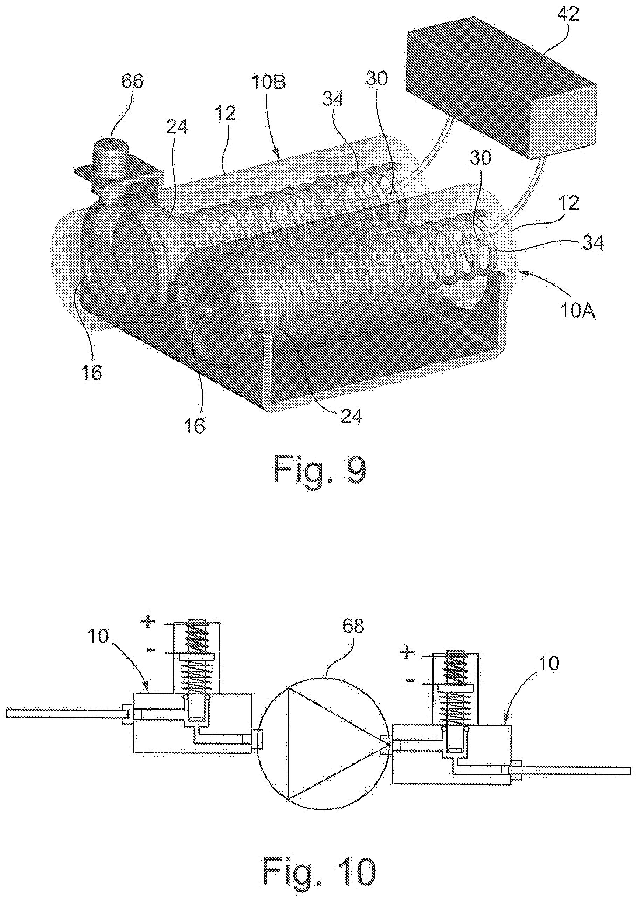

Figures 8 and 9 show a proportional valve 10 according to the present invention that is configured for being applied to a machine that is intended for preparing cold beverages. In machines for dispensing beverages and soft-drinks which are normally fizzy and cold there is an instantaneous reconstituting of the end beverage by suitably mixing water, added with a certain amount of CO₂, with a concentrated syrup that creates the flavour and the aroma of the end beverage. The process occurs by keeping constant the mixing ratio within a range of very precise values.

There are essentially two kinds of systems that are currently used for carrying out the mixing process. The first system consists in a double mechanical valve which makes it possible to set a certain flow of concentrated syrup and of water in the right ratio, and of compensating the variations of the pressure of the two fluids being introduced. The mixing head indeed comprises two sections, each of which is provided with a cylinder and a piston that is actuated with a spring, of which one section is for the syrups and the other one is for the water. By acting on the load of the two springs there is an equivalent passage that may be big or small between the cylinder and the piston. Another system, which is more sophisticated and costly, consists in a valve, called volumetric valve and with electronic control, which is capable of exerting feedback on the amount of concentrated syrup, while monitoring the flow of the water component. All of this in order to ensure a higher level of precision of the mixing ratio.

The double mechanical valve of conventional mixing systems can be replaced with two corresponding proportional valves 10 according to the present invention, that is to say a first proportional valve 10A that is for water and a second proportional valve 10B that is for the syrup. As shown in figure 8, each proportional valve 10A and 10B is provided with a respective cylindrical main body 12 with an elastic actuation member 30 inside it that is made of a shape-memory alloy, which opens and closes the respective second connection element 16, made in the form of an orifice, with extreme precision. Each elastic actuation member 30 is in any case capable of keeping its programmed position thanks to an internal self-regulating system.

The elastic actuation member 30 changes its length as a function of the electric current that passes through it. By varying the length of the elastic actuation member 30 also the electrical resistance changes and therefore, in real time, it is possible to know the exact position of the actuation piston 24. In this case the mixing system operates with a single feedback on the position of the actuation piston 24, which is kept with extreme precision. Considering low fluctuations of the pressure of the fluids in inlet, high end precision is obtained without the addition of any sensor. The whole mixing system is managed by a central control unit 42 which obviously manages also the calibration step during the installation on the machine that is intended for the preparation of cold beverages.

One variant of this mixing system, which provides a further increase in the precision, involves the introduction of a second control ring though a flow rate sensor 66 that is applied directly onto the second connection element 16 from which the flow of syrup comes out, which is naturally the most important fluid to dose.

Preferably, the flow rate sensor 66 is of the type without contact with the fluid, since it is made for example by a sensor of the optical type which operates on the principle of diffusion of a laser beam. In such a way the mixing system is capable of obtaining very high precision and can compensate, in real time, possible pressure variations upstream of the dispensing valve of the machine that is intended for the preparation of cold beverages.

Figure 10 shows a volumetric pump 68 that encloses one or more proportional valves 10 according to the present invention. The proportional valve 10 can be integrated inside the volumetric pump 68 as a delivery stage, as a suction stage or as both. This would allow to use a very simplified pressure generating system, entrusting the proportional valve 10 with the performance necessary for the dosing precision.

The proportional valve 10 could finally be applied to a selective catalyst reduction (SCR) system, of the discharge gas mounted on a generic motor vehicle. In such an application the proportional valve 10 would replace the conventional solenoid injector.

It has thus been seen that the proportional valve according to the present invention achieves the purposes previously highlighted, in particular making it possible to obtain the following advantages:
- establishing, with certainty, the flow opening and closing time, thanks to the electric piloting of the proportional valve;
- compactness and simplicity of the proportional valve, which can be easily located inside a super automatic coffee machine thanks to the use of a simple shape-memory alloy wire, which replaces coils and magnetic actuators which are certainly more bulky;
- possibility of exerting substantial actuation force through the use of suitable shape-memory alloy materials, which also make the proportional valve more resistant to the friction generated by the deposits and by the encrustations of the beverage;
- minimal impact on the temperature of the beverage, thanks to the use of components in compact technopolymer, with unsubstantial masses and with low heat exchange coefficient.

The proportional valve of the present invention thus conceived can in any case undergo numerous modifications and variants, all covered by the same inventive concept; moreover, all the details can be replaced by technically equivalent elements. In practice the materials used, as well as the shapes and sizes, could be any according to the technical requirements.

The scope of protection of the invention is thus defined by the attached claims.

## Claims

1. Machine for producing and dispensing beverages comprising at least a pump (38) for the circulation of a fluid, a dispensing group (44) for a beverage, a central control unit (42) and a proportional valve (10) operatively connected to said central control unit (42), said proportional valve (10) comprising a main body (12) provided with a first connection element (14) to the hydraulic circuit of the machine, configured for entering a fluid into the proportional valve (10), and with a second connection element (16) to said hydraulic circuit of the machine, configured for the ejection of the fluid from the proportional valve (10), inside of the main body (12) there being provided at least an inlet duct (18) for the fluid, operatively connected to the first connection element (14), and at least an outlet duct (20) for the fluid, operatively connected both to said inlet duct (18) and to the second connection element (16), inside of the main body (12), in an inner chamber (22) forming the intersection point between the inlet duct (18) and the outlet duct (20), there being further inserted an actuator piston (24), movable according to reciprocating motion, which is capable of selectively putting in communication said inlet duct (18) with said outlet duct (20), said actuator piston (24) being operatively connected to an actuation mechanism, the proportional valve (10) being **characterized in that** the actuation mechanism comprises at least an elastic actuation member (30) made of a shape-memory alloy, as well as an electric current generating device (32), operatively connected to the elastic actuation member (30) in order to modify, in a progressive and modulable manner, the value of the elastic force applied on the actuator piston (24) through a temperature variation caused by the passage of electric current inside said elastic actuation member (30).

2. Machine for producing and dispensing beverages according to claim 1, **characterized in that** the actuation mechanism comprises at least an elastic counteracting element (34), configured to counteract the elastic force of the elastic actuation member (30).

3. Machine for producing and dispensing beverages according to claim 2, **characterized in that** the elastic counteracting member (34) consists in a helical torsion spring operating by compression which is wounded around the stem of the actuation piston (24).

4. Machine for producing and dispensing beverages according to claim 3, **characterized in that** the elastic actuation member (30) consists in a wire made of a shape-memory alloy provided with at least a first constrain point obtained on an outer wall of the main body (12) and with a second constrain point obtained on an upper portion of the actuation piston (24).

5. Machine for producing and dispensing beverages according to claim 3, **characterized in that** the elastic actuation member (30) consists in a helical torsion spring operating by compression which is wounded around the upper portion of the actuation piston stem (24) in an opposite position with respect to the counteracting spring (34), which, on the other hand, is wounded around the lower portion of said stem.

6. Machine for producing and dispensing beverages according to claim 5, **characterized in that** the actuation spring (30) is provided with a first constrain point obtained on an upper wall of the main body (12) and with a second constrain point obtained on a first side of a washer (36) keyed on the stem of the actuation piston (24), on the opposite side of the washer (36) one of the constrain points of the counteracting spring (34) being thus obtained.

7. Machine for producing and dispensing beverages according to any one of the claims from 1 to 6, **characterized in that** the actuation piston (24) is provided both with a first closing gasket (26) capable of blocking in a sealing manner the fluid entering into the inner chamber (22) and with a second sealing gasket (28) capable of preventing the fluid from exiting from the main body (12) of the proportional valve (10).

8. Machine for producing and dispensing beverages according to claim 7, **characterized in that** the second sealing gasket (28) is interposed between the inner chamber (22) and the actuation mechanism components, i.e. both the elastic actuation member (30) and the respective elastic counteracting member (34), so as to isolate the whole actuation mechanism with respect to the parts of the proportional valve (10) wherein the fluid flows and to prevent possible deposits and/or scales caused by said fluid to be formed onto the actuation mechanism components.

9. Machine for producing and dispensing beverages according to any one of the claims from 1 to 8, **characterized in that** it comprises a fluid heating device (46) and **in that** the proportional valve (10) is arranged downstream of said dispensing group (44) so as to allow a progressive and modulable opening for the passage of the beverage exiting from the machine.

10. Machine for producing and dispensing beverages according to claim 9, further comprising a pressure sensor (54), interposed between the dispensing group (44) and the proportional valve (10) and operatively connected to the central control unit (42), said central control unit (42), according to a predefined pressure level, generating a train of current pulses for piloting the elastic actuation member (30) in order to obtain a feedback control system programmable according to the opening modes of the proportional valve (10), thus setting an operating flowrate/pressure point of the ideal beverage for the type of beverage which is wished to be extracted from the machine.

## Patentansprüche

1. Maschine zur Herstellung und Ausgabe von Getränken, umfassend wenigstens eine Pumpe (38) zum Umwälzen eines Fluids, eine Ausgabegruppe (44) zum Ausgeben eines Getränks, eine zentrale Steuereinheit (42) und ein Proportionalventil (10), das mit der genannten zentralen Steuereinheit (42) wirkverbunden ist, wobei das genannte Proportionalventil (10) einen Hauptkörper (12) umfasst, der mit einem ersten Verbindungselement (14) zur Verbindung an den Hydraulikkreis der Maschine versehen ist, das zum Eingeben eines Fluids in das Proportionalventil (10) ausgebildet ist, und mit einem zweiten Verbindungselement (16) zur Verbindung an den genannten Hydraulikkreis der Maschine, das zum Ausspritzen des Fluids aus dem Proportionalventil (10) ausgebildet ist, wobei im Inneren des Hauptkörpers (12) wenigstens ein Einlasskanal (18) für das Fluid vorgesehen ist, der mit dem ersten Verbindungselement (14) wirkverbunden ist, und wenigstens ein Auslasskanal (20) für das Fluid, der sowohl mit dem genannten Einlasskanal (18) als auch mit dem zweiten Verbindungselement (16) wirkverbunden ist, wobei im Inneren des Hauptkörpers (12) in einer inneren Kammer (22) der Schnittpunkt zwischen dem Einlasskanal (18) und dem Auslasskanal (20) gebildet ist, wobei ferner ein gemäß einer Hin- und Herbewegung beweglicher Stellkolben (24) eingefügt ist, der in der Lage ist, den genannten Einlasskanal (18) selektiv mit dem genannten Auslasskanal (20) in Verbindung zu setzen, wobei der Stellkolben (24) mit einem Betätigungsmechanismus wirkverbunden ist, wobei das Proportionalventil (10) **dadurch gekennzeichnet ist, dass** der Betätigungsmechanismus wenigstens ein elastisches Betätigungselement (30) umfasst, das aus einer Formgedächtnislegierung hergestellt ist, sowie eine Stromerzeugungseinrichtung (32), die mit dem elastischen Betätigungselement (30) wirkverbunden ist, um schrittweise und auf modulierbare Weise den Wert der auf den Stellkolben (24) aufgebrachten elastischen Kraft durch eine Temperaturänderung zu ändern, die durch den Durchgang von elektrischem Strom in dem genannten elastischen Betätigungselement (30) verursacht wird.

2. Maschine zur Herstellung und Ausgabe von Getränken nach Anspruch 1, **dadurch gekennzeichnet, dass** der Betätigungsmechanismus wenigstens ein entgegenwirkendes elastisches Element (34) umfasst, das ausgebildet ist, um der elastischen Kraft des elastischen Betätigungselements (30) entgegenzuwirken.

3. Maschine zur Herstellung und Ausgabe von Getränken nach Anspruch 2, **dadurch gekennzeichnet, dass** das entgegenwirkende elastische Element (34) aus einer durch Kompression wirkenden, spiralförmigen Torsionsfeder besteht, die um den Schaft des Stellkolbens (24) gewickelt ist.

4. Maschine zur Herstellung und Ausgabe von Getränken nach Anspruch 3, **dadurch gekennzeichnet, dass** das elastische Betätigungselement (30) aus einem aus einer Formgedächtnislegierung hergestellten Draht besteht, der mit wenigstens einem auf einer Außenwand des Hauptkörpers (12) erhaltenen ersten Einspannpunkt und mit einem auf einem oberen Abschnitt des Stellkolbens (24) erhaltenen zweiten Einspannpunkt versehen ist.

5. Maschine zur Herstellung und Ausgabe von Getränken nach Anspruch 3, **dadurch gekennzeichnet, dass** das elastische Betätigungselement (30) aus einer durch Kompression wirkenden, spiralförmigen Torsionsfeder besteht, die um den oberen Abschnitt des Stellkolbens (24) gewickelt ist, in einer entgegengesetzten Stellung gegenüber der entgegenwirkenden Feder (34), die andererseits um den unteren Abschnitt des genannten Kolbens gewickelt ist.

6. Maschine zur Herstellung und Ausgabe von Getränken nach Anspruch 5, **dadurch gekennzeichnet, dass** die Betätigungsfeder (30) mit einem ersten Einspannpunkt versehen ist, der auf einer oberen Wand des Hauptkörpers (12) erhalten ist, und mit einem zweiten Einspannpunkt, der auf einer ersten Seite einer auf den Schaft des Stellkolbens (24) aufgekeilten Unterlegscheibe (36) erhalten ist, wodurch auf der gegenüberliegenden Seite der Unterlegscheibe (36) einer der Einspannpunkte der entgegenwirkenden Feder (34) erhalten ist.

7. Maschine zur Herstellung und Ausgabe von Getränken nach einem der Ansprüche 1 bis 6, **dadurch gekennzeichnet, dass** der Stellkolben (24) sowohl mit einer ersten, schließenden Dichtung (26) versehen ist, die in der Lage ist, das in die Innenkammer (22) eintretende Fluid auf dichte Weise zu sperren, und mit einer zweiten schließenden Dichtung (28), die in der Lage ist, das Austreten des Fluids aus dem Hauptkörper (12) des Proportionalventils (10) zu verhindern.

8. Maschine zur Herstellung und Ausgabe von Getränken nach Anspruch 7, **dadurch gekennzeichnet, dass** die zweite schließende Dichtung (28) zwischen die Innenkammer (22) und die Bestandteile des Betätigungsmechanismus, d.h. sowohl das elastische Betätigungselement (30) als auch das jeweilige entgegenwirkende elastische Element (34) eingefügt ist, um den gesamten Betätigungsmechanismus in Bezug auf die Teile des Proportionalventils (10), in dem das Fluid fließt, zu isolieren und mögliche Ablagerungen und/oder Beläge zu verhindern, die durch das zu bildende genannte Fluid auf den Bestandteilen des Betätigungsmechanismus verursacht werden.

9. Maschine zur Herstellung und Ausgabe von Getränken nach einem der Ansprüche 1 bis 8, **dadurch gekennzeichnet, dass** sie eine Fluid-Heizeinrichtung (46) umfasst und das Proportionalventil (10) stromabwärts der genannten Ausgabegruppe (44) angeordnet ist, um ein schrittweises und modulierbares Öffnen für den Durchfluss des aus der Maschine austretenden Getränks zu ermöglichen.

10. Maschine zur Herstellung und Ausgabe von Getränken nach Anspruch 9, weiter umfassend einen Drucksensor (54), der zwischen die Ausgabegruppe (44) und das Proportionalventil (10) eingefügt und mit der zentralen Steuereinheit (42) wirkverbunden ist, wobei die genannte zentrale Steuereinheit (42) entsprechend einem vordefinierten Druckpegel eine Impulsfolge von Stromimpulsen zum Ansteuern des elastischen Betätigungselements (30) erzeugt, um ein Rückkoppelungssteuerungssystem zu erhalten, das entsprechend den Öffnungsmodalitäten des Proportionalventils (10) programmierbar ist, wodurch ein Strömungsgeschwindigkeits-/Druck-Arbeitspunkt des idealen Getränks für die gewünschte Getränkeart eingestellt wird, die aus der Maschine entnommen werden soll.

## Revendications

1. Machine pour la production et la distribution de boissons comprenant au moins une pompe (38) pour la circulation d'un fluide, un groupe de distribution (44) pour une boisson, une unité centrale de commande (42) et une soupape proportionnelle (10) connectée fonctionnellement à ladite unité centrale de commande (42), ladite soupape proportionnelle (10) comprenant un corps principal (12) muni d'un premier élément de connexion (14) au circuit hydraulique de la machine, configuré pour faire entrer un fluide dans la soupape proportionnelle (10), et d'un deuxième élément de connexion (16) audit circuit hydraulique de la machine, configuré pour l'éjection du fluide de la soupape proportionnelle (10), à l'intérieur du corps principal (12) étant disposé au moins un conduit d'entrée (18) pour le fluide, connecté fonctionnellement au premier élément de connexion (14), et au moins un conduit de sortie (20) pour le fluide, connecté fonctionnellement à la fois audit conduit d'entrée (18) et au deuxième élément de connexion (16), à l'intérieur du corps principal (12), dans une chambre intérieure (22) formant le point d'intersection entre le conduit d'entrée (18) et le conduit de sortie (20) étant disposé en outre un piston actionneur (24), mobile selon un mouvement alternatif, qui est capable de mettre sélectivement en communication ledit conduit d'entrée (18) avec ledit conduit de sortie (20), ledit piston actionneur (24) étant connecté fonctionnellement à un mécanisme d'actionnement, la soupape proportionnelle (10) étant **caractérisée en ce que** le mécanisme d'actionnement comprend au moins un élément d'actionnement élastique (30) constitué d'un alliage à mémoire de forme, ainsi qu'un dispositif générateur de courant électrique (32), connecté fonctionnellement à l'élément d'actionnement élastique (30) de manière à modifier, d'une manière progressive et modulable, la valeur de la force élastique appliquée sur le piston actionneur (24) par le biais d'une variation de température provoquée par le passage de courant électrique à l'intérieur dudit élément d'actionnement élastique (30).

2. Machine pour la production et la distribution de boissons selon la revendication 1, **caractérisée en ce que** le mécanisme d'actionnement comprend au moins un élément antagoniste élastique (34), configuré pour s'opposer à la force élastique de l'élément d'actionnement élastique (30).

3. Machine pour la production et la distribution de boissons selon la revendication 2, **caractérisée en ce que** l'élément antagoniste élastique (34) consiste en un ressort de torsion hélicoïdal fonctionnant par compression qui est enroulé autour de la tige du piston actionneur (24).

4. Machine pour la production et la distribution de boissons selon la revendication 3, **caractérisée en ce que** l'élément d'actionnement élastique (30) consiste en un fil constitué d'un alliage à mémoire de forme muni d'au moins un premier point de contrainte obtenu sur une paroi extérieure du corps principal (12) et d'un deuxième point de contrainte obtenu sur une portion supérieure du piston actionneur (24).

5. Machine pour la production et la distribution de boissons selon la revendication 3, **caractérisée en ce que** l'élément d'actionnement élastique (30) consiste en un ressort de torsion hélicoïdal fonctionnant par compression qui est enroulé autour de la portion supérieure de la tige de piston actionneur (24) dans une position opposée par rapport au ressort antagoniste (34), qui, d'autre part, est enroulé autour de la portion inférieure de ladite tige.

6. Machine pour la production et la distribution de boissons selon la revendication 5, **caractérisée en ce que** le ressort d'actionnement (30) est muni d'un premier point de contrainte obtenu sur une paroi supérieure du corps principal (12) et d'un deuxième point de contrainte obtenu sur un premier côté d'une rondelle (36) clavetée sur la tige du piston actionneur (24), un des points de contrainte du ressort antagoniste (34) étant ainsi obtenu sur le côté opposé de la rondelle (36).

7. Machine pour la production et la distribution de boissons selon l'une quelconque des revendications 1 à 6, **caractérisée en ce que** le piston actionneur (24) est muni à la fois d'un premier joint de fermeture (26) capable de bloquer d'une manière étanche le fluide entrant dans la chambre intérieure (22) et d'un deuxième joint d'étanchéité (28) capable d'empêcher le fluide de sortir du corps principal (12) de la soupape proportionnelle (10).

8. Machine pour la production et la distribution de boissons selon la revendication 7, **caractérisée en ce que** le deuxième joint d'étanchéité (28) est interposé entre la chambre intérieure (22) et les composants du mécanisme d'actionnement, c'est-à-dire à la fois l'élément d'actionnement élastique (30) et l'élément antagoniste élastique (34) respectif, de manière à isoler tout le mécanisme d'actionnement par rapport aux parties de la soupape proportionnelle (10) dans lesquelles le fluide s'écoule et pour empêcher tout éventuel dépôt et/ou incrustation provoqué par ledit fluide de se former sur les composants du mécanisme d'actionnement.

9. Machine pour la production et la distribution de boissons selon l'une quelconque des revendications 1 à 8, **caractérisée en ce qu'**elle comprend un dispositif de chauffage de fluide (46) et **en ce que** la soupape proportionnelle (10) est agencée en aval dudit groupe de distribution (44) de manière à permettre une ouverture progressive et modulable pour le passage de la boisson sortant de la machine.

10. Machine pour la production et la distribution de boissons selon la revendication 9, comprenant en outre un capteur de pression (54), interposé entre le groupe de distribution (44) et la soupape proportionnelle (10) et connecté fonctionnellement à l'unité centrale de commande (42), ladite unité centrale de commande (42), en fonction d'un niveau de pression prédéfini, générant un train d'impulsions de courant pour piloter l'élément d'actionnement élastique (30) de manière à obtenir un système de commande de rétroaction programmable en fonction des modes d'ouverture de la soupape proportionnelle (10), en réglant ainsi un point de débit/pression de la boisson idéale pour le type de boisson dont l'extraction hors de la machine est désiré.
